# EUROPÄISCHE PATENTANMELDUNG

(11) **EP 4 703 202 A1**
(43) Veröffentlichungstag der Anmeldung: **04.03.2026**
(21) Anmeldenummer: 25197996.9
(22) Anmeldetag: 26.08.2025
(51) Int. Cl.: B60P 7/15, B25B 5/00, F16B 9/02

(54) **SPANNVORRICHTUNG FÜR EINEN ZWISCHENWANDVERSCHLUSS UND ZWISCHENWANDVERSCHLUSS MIT WENIGSTENS EINER SPANNVORRICHTUNG ZUM SELBSTVERSTÄRKENDEN KLEMMEN**

(30) Priorität: 28.08.2024 DE 102024124564
(71) Anmelder: allsafe GmbH & Co. KG, 78234 Engen (DE)
(72) Erfinder: MERK, Michael, 78234 Engen (DE); WIELAND, Leonie, 78234 Engen (DE)
(74) Vertreter: Patentanwälte und Rechtsanwalt Weiß, Arat & Partner mbB

(57) **Zusammenfassung**

Die vorliegende Erfindung betrifft eine Spannvorrichtung für einen Zwischenwandverschluss, sowie einen Zwischenwandverschluss mit wenigstens einer Spannvorrichtung zur Anordnung auf einer Bordwand eines Fahrzeuges oder eines Fahrzeuganhängers zur selbstverstärkenden Klemmung der Spannvorrichtung an der Bordwand. Hierzu weist die Spannvorrichtung ein Einschubelement sowie eine um eine Drehachse drehbar zu dem Einschubelement und über die Drehachse mit dem Einschubelement verbundene Klemmbaugruppe auf, wobei bei einer Drehung der Klemmbaugruppe oder bei einer Drehung des Einschubelements um die Drehachse ein Klemmspalt gleichzeitig zumindest abschnittsweise eine Klemmspaltvergrößerung und zumindest abschnittsweise eine Klemmspaltverkleinerung zur selbstverstärkenden Klemmung der Spannvorrichtung am Zwischenwandverschluss aufweist. Ferner betrifft die Erfindung ein Verfahren der selbstverstärkenden Klemmung des Zwischenwandverschlusses bzw. der Spannvorrichtung des Zwischenwandverschlusses.

## Beschreibung

Die vorliegende Erfindung betrifft eine Spannvorrichtung für einen Zwischenwandverschluss, sowie einen Zwischenwandverschluss mit wenigstens einer Spannvorrichtung zum selbstverstärkenden Klemmen. Ferner betrifft die Erfindung ein Verfahren zum selbstverstärkenden Klemmen des Zwischenwandverschlusses mit Spannvorrichtung.

### STAND DER TECHNIK

In der EP0258193A3 ist eine Ladungssicherungsvorrichtung für Laderäume mit mindestens einer Querstange, die seitlich über den Laderaum und mit dessen Endpositionen mittels Verbindungsmitteln an Seitenklappen, Bordwänden oder dergleichen im Laderaum befestigbar ist, beschrieben. Jedes Verbindungsmittel besteht aus zwei Verbindungselementen, einem ersten U-förmigen Verbindungselement zur Aufnahme der Bordwand und einem zweiten Verbindungselement zur Aufnahme eines Endabschnitts des Querbalkens. Das zweite Verbindungselement ist schwenkbar um einen Drehpunkt quer zum ersten Verbindungselementen angeordnet. Die drehbare Anordnung des ersten Verbindungsmittels mit dem zweiten Verbindungsmittel ermöglicht lediglich eine Erleichterung beim Anbringen der Ladungssicherungsvorrichtung an der Bordwand.

Die EP1108609B1 offenbart eine Vorrichtung zum Sichern von Ladegut auf der Ladefläche eines Fahrzeuges. Die Vorrichtung umfasst ein balkenartiges stranggepresstes Hohlprofil mit beidends angebrachten hakenähnlichen Anschlussorganen, an denen jeweils ein der Profilstirnkante gegenüberliegender Klemmsteg relativ zur Profilstirnkante bewegbar ist. Dabei ist in das balkenartige Hohlprofil endwärts ein Einschubkörper eingeführt, der mit einem, den Klemmsteg aufweisenden Spannelement versehen ist. Der Einschubkörper ist im Profilinnenraum in Längsachse des Hohlprofils bewegbar gelagert.

In der EP3842183A1 ist ebenfalls eine Klemmvorrichtung für einen Zwischenwandverschluss zur Ladungssicherung beschrieben. Die Klemmvorrichtung weist einen Träger, welcher zur Befestigung an einem Ladungssicherungsbalken vorgesehen ist, auf. Der Träger weist ein Klemmstück, welches mittels einer Hebelmechanik begrenzt beweglich am Träger angebracht ist und mit Federmitteln, welche zur Erzeugung einer Klemmkraft zwischen Träger und Klemmstück wirksam sind, auf. Des Weiteren ist eine Klemmkraftanzeige vorgesehen. In der EP1880900B1 ist ein Sperrbalken zur Ladungssicherung in Laderäumen beschrieben. Die dafür erforderliche Schwenkgabel mit Schwenkhebel weist unter anderem ein Profilstück mit einem nachgiebigen Element sowie einem Klemmschenkel mit einem daran angeordneten bolzenförmigen nachgiebigen Element auf. Zwischen dem nachgiebigen Element des Profilstückes sowie dem nachgiebigen Element des Klemmschenkels ist ein Schlitz gebildet, in welchem die Bordwand aufgenommen werden kann. Ein Schwenkbolzen erstreckt sich durch das in einem Hohlprofil angeordnete Profilstück sowie einen Abschnitt des Klemmschenkels derart, dass eine Verdrehung des Klemmschenkels sowie gleichzeitig des Profilstückes relativ zum Hohlprofil erfolgen kann, um eine Deformation und Beschädigung der Schwenkgabel bei Auftreten einer Last auf das Hohlprofil zu vermeiden. Die nachgiebigen Elemente beiderseits des Schlitzes sollen ein Verrutschen des Sperrbalkens entlang der Bordwand verhindern.

### OFFENBARUNG DER ERFINDUNG

Es ist daher die Aufgabe der vorliegenden Erfindung eine Optimierung der aus dem Stand der Technik bereits bekannten Klemmvorrichtungen für einen Sperrbalken bzw. einen Zwischenwandverschluss zu schaffen, durch welche auf eine einfache sowie material- und kostensparenden Weise eine hinreichende Klemmkraftwirkung bei Auftreten einer Druckkraft auf den Sperrbalken bzw. den Zwischenwandverschluss ohne weiteres Zutun eines Bedieners sowie ohne vorherige aufwendige Anpassungen und Einstellungen des Zwischenwandverschlusses ermöglicht wird, um ein ungewolltes Verrutschen der zu transportierenden Last sowie damit einhergehende Unfälle zu vermeiden.

Die voranstehende Aufgabe wird gelöst durch eine Spannvorrichtung für einen Zwischenwandverschluss mit den Merkmalen des Anspruchs 1, durch einen Zwischenwandverschluss mit zumindest einer Spannvorrichtung mit den Merkmalen des Anspruches 9 sowie durch ein Verfahren zur selbstverstärkenden Klemmung des Zwischenwandverschlusses bzw. der Spannvorrichtung des Zwischenwandverschlusses mit den Merkmalen gemäß Anspruch 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Spannvorrichtung beschrieben sind, selbstverständlich auch im Zusammenhang mit dem erfindungsgemäßen Zwischenwandverschluss oder mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Die erfindungsgemäße Spannvorrichtung für einen Zwischenwandverschluss zur Anordnung an einer Bordwand eines Fahrzeuges oder eines Fahrzeuganhängers weist zumindest ein Einschubelement sowie eine um eine Drehachse drehbar zu dem Einschubelement und über die Drehachse mit dem Einschubelement verbundene Klemmbaugruppe auf. Die Drehachse erstreckt sich zumindest teilweise von der Klemmbaugruppe zu dem Einschubelement. Vorteilhaft erstreckt sich die Drehachse demnach im Wesentlichen rechtwinklig bzw. orthogonal zur Längserstreckung bzw. Längsrichtung der Bordwand. Besonders vorteilhaft erstreckt sich die Drehachse insbesondere in bzw. entlang der Höhenrichtung des Einschubelementes. Erfindungsgemäß weist die Klemmbaugruppe ein sich zumindest abschnittsweise über ein distales Kontaktende des Einschubelementes weg erstreckendes Hakenelement auf, welches einen Ausgleichsabschnitt und einen zum Ausgleichsabschnitt abgewinkelt ausgebildeten Klemmabschnitt aufweist. Das distale Kontaktende des Einschubelementes ist dabei das Ende des Einschubelementes, welches bei einer Anordnung der Spannvorrichtung an eine Bordwand direkt bzw. unmittelbar eine Oberfläche dieser Bordwand kontaktiert. Demzufolge findet sich kein weiteres Element zwischen der Bordwand und dem Einschubelement. Das Einschubelement ist folglich ein wesentlicher direkter bzw. unmittelbarer Bestandteil der Spannvorrichtung zum Verspannen bzw. Klemmen des Zwischenwandverschlusses. Des Weiteren sind erfindungsgemäß der Klemmabschnitt und das distale Kontaktende des Einschubelementes mittels eines hinsichtlich einer zwischen dem Klemmabschnitt und dem distalen Kontaktende bestehenden und hinsichtlich dessen Spaltbreite größenveränderlichen Klemmspaltes zur zumindest abschnittsweisen Aufnahme der Bordwand derart variabel voneinander beabstandet, dass bei einer Drehung der Klemmbaugruppe oder bei einer Drehung des Einschubelements um die Drehachse der Klemmspalt gleichzeitig zumindest abschnittsweise eine Klemmspaltvergrößerung und zumindest abschnittsweise eine Klemmspaltverkleinerung zur selbstverstärkenden Klemmung der Spannvorrichtung an der Bordwand aufweist.

Die erfindungsgemäße Spannvorrichtung, welche auch als Klemmvorrichtung bezeichnet werden kann, ist vorteilhaft mit einem Stangen-, Brett- oder Balkenelement verbindbar, um einen Zwischenwandverschluss zu bilden. Ein Zwischenwandverschluss, welcher beispielsweise auch als Klemmbalken, Sperrbalken, Klemmbrett oder Spannbrett bezeichnet werden kann, dient vorteilhaft dazu Ladung in einem Laderaum auf einem Fahrzeug oder einem Fahrzeuganhänger zwischen Bordwänden des Laderaumes zu sichern. Dabei erstreckt sich der Zwischenwandverschluss im Wesentlichen quer zur Fahrtrichtung im Laderaum von einer Bordwand zur anderen. Die Spannvorrichtung ist vorteilhaft ein Bestandteil des Zwischenwandverschlusses und dient dazu eine Anordnung des Zwischenwandverschlusses an der Bordwand sowie die Fixierung des Zwischenwandverschlusses an der Bordwand zu ermöglichen.

Durch eine derartige erfindungsgemäße Spannvorrichtung kann eine selbstverstärkende Klemmung des Zwischenwandverschlusses an der Bordwand ermöglicht werden. Als selbstverstärkende Klemmung wird dabei im Rahmen der Erfindung ein Verklemmen bzw. ein Verkanten der Spannvorrichtung bzw. eines Abschnittes der Spannvorrichtung mit der Bordwand derart verstanden, dass eine Bewegung, insbesondere ein ungewolltes Verrutschen des Zwischenwandverschlusses entlang der Bordwand bei Auftreten bzw. Aufbringen einer Druckkraft auf den Zwischenwandverschluss beispielsweise quer, insbesondere orthogonal zur Längserstreckung des Zwischenwandverschlusses und insbesondere in Fahrtrichtung (bei Installation des Zwischenwandverschlusses im Laderaum) ohne Eingreifen eines Bedieners) verhindert wird. Dabei werden vorteilhaft keine zusätzlichen Teile, wie Profile, elastische Elemente etc. oder oberflächenbearbeitete Elemente mit Rillen oder rauen Strukturen benötigt. Dies macht die erfindungsgemäße Spannvorrichtung langlebig, einfach in deren Aufbau und gleichzeitig kostengünstig in deren Herstellung. Das zusätzlich angestrebte Ziel bei der Entwicklung der erfindungsgemäßen Spannvorrichtung mit teilereduziertem Design einen materialeinsparenden Beitrag zur Schonung der Umwelt zu stiften, wird durch die erfindungsgemäße Spannvorrichtung ebenfalls verwirklicht.

Gemäß einer vorteilhaften Weiterentwicklung der Erfindung ist bei der Spannvorrichtung die Klemmbaugruppe vollständig außerhalb des Einschubelementes ausgebildet und angeordnet. Hierdurch kann vorteilhaft bei einer Beschädigung eines Bestandteils der Klemmbaugruppe diese in einfacher und kostengünstiger Weise vom Einschubelement entfernt und durch eine neue Klemmbaugruppe ersetzt werden. Entsprechendes gilt bei einer Beschädigung des Einschubelementes, welches in einfacher Weise durch ein neues Einschubelement ausgetauscht werden kann, um die Spannvorrichtung zu reparieren und erneut einzusetzen. Des Weiteren dient die Zweiteilung zwischen Klemmbaugruppe und Einschubelement dazu eine Verdrehung der gesamten Klemmbaugruppe relativ zu dem Einschubelement und vice versa zu ermöglichen. Vorteilhaft besteht die Spannvorrichtung lediglich aus der Klemmbaugruppe und dem Einschubelement. Besonders vorteilhaft ist die Klemmbaugruppe über ein bolzenförmiges Element, wie beispielsweise einen (Niet-)Bolzen mit dem Einschubelement verbunden.

Es ist des Weiteren denkbar, dass die Klemmbaugruppe das Hakenelement, ein Hebelelement und ein das Hakenelement und das Hebelelement miteinander wirkverbindendes Verbindungselement aufweist. Infolgedessen umfasst die Klemmbaugruppe im Wesentlichen drei Bauteile, welche durch diverse Schraubenelemente, Federelemente, Stifte und Muttern aneinander angeordnet und miteinander in Wirkverbindung gebracht sind. Die Schraubenelemente, Federelemente, Stifte und Muttern bilden gemeinsam eine Verstelleinrichtung. Diese dient vorteilhaft dazu eine Verstellung des Klemmspaltes zur Anpassung des Klemmspaltes an die Dicke der Bordwand nach dem Aufsetzen der Spannvorrichtung auf die Bordwand zu ermöglichen. Vorteilhaft zeichnet sich die Spannvorrichtung, insbesondere die Klemmbaugruppe der Spannvorrichtung demnach durch einen einfachen und kostengünstigen Aufbau mit einer auf ein erforderliches Minimum reduzierten Anzahl an Bauteilen aus.

Entsprechend einer weiteren vorteilhaften Ausgestaltung ist eine selbstverstärkende Klemmung der Spannvorrichtung an der Bordwand ausschließlich über die Klemmbaugruppe, insbesondere den Klemmabschnitt des Hakenelementes, sowie das distale Kontaktende des Einschubelementes erzeugt bzw. ermöglicht. Das bedeutet, dass keine zusätzlichen Bauteile, wie beispielsweise oberflächenangeraute oder deformierbare Druckelemente usw., erforderlich sind. Lediglich eine Kante des Einschubelementes, welche bereits bei der Anordnung der Spannvorrichtung an der Bordwand eine Oberfläche der Bordwand zumindest abschnittsweise kontaktiert und folglich das distale Kontaktende des Einschubelementes verwirklicht sowie der Klemmabschnitt des Hakenelementes dienen zum verrutschsicheren, insbesondere selbstverstärkenden Klemmen bzw. Einklemmen der Bordwand. Vorteilhaft ist zum einen durch die Möglichkeit der Verdrehung der Klemmbaugruppe relativ zum Einschubelement sowie zum anderen durch die Klemmung und letztlich Verkantung der Kante des Einschubelementes am distalen Kontaktende bei Auftreten einer Druckkraft auf den Zwischenwandverschluss eine Zerstörung der Spannvorrichtung zumindest nahezu ausgeschlossen. Des Weiteren dient die (Ver-)Drehung der Klemmbaugruppe relativ zum Einschubelement vorteilhaft dazu, den zwischen dem distalen Kontaktende des Einschubelementes, insbesondere der (Kontakt-)Kante des Einschubelementes und dem Klemmabschnitt des Hakenelementes bestehenden Klemmspalt zumindest an einer Seite bzw. in einem Bereich derart zu minimieren, dass die mit der Bordwand in Kontakt befindliche Kante des Einschubelementes zumindest abschnittsweise in das Material der Bordwand eingreift und dort zu einem Verkanten des Einschubelementes mit der Bordwand und demzufolge zu einer selbstverstärkenden Klemmung der Bordwand in der Spanneinrichtung führt. Die Kante kann im Nachfolgenden auch als Verkantungskante, Kontaktkante oder Verkantungswandung bezeichnet werden.

Es ist ebenfalls denkbar, dass das Hakenelement über ein sich durch ein Führungselement des Hebelelementes hindurch erstreckendes Schraubenelement mit dem Hebelelement wirkverbunden ist. Das Führungselement ist vorteilhaft ein Bestandteil des Hebelelementes. Das Führungselement kann einteilig oder einstückig mit dem Hebelelement ausgebildet sein. Es dient vorteilhaft dazu einen Beitrag zur Bewegung, insbesondere Gleitbewegung des Hakenelementes relativ zum Verbindungselement zu ermöglichen. Vorteilhaft sind demnach alle drei Hauptbauteile der Klemmbaugruppe, sprich das Hakenelement, das Hebelelement und das Verbindungselement für die Realisierung einer Gleitbewegung, welche auch als Schiebebewegung bezeichnet werden kann, des Hakenelementes erforderlich. Diese Gleitbewegung des Hakenelementes dient wiederum vorteilhaft dazu, den zwischen dem Klemmabschnitt des Hakenelementes und dem distalen Kontaktende des Einschubelementes bestehende Klemmspalt (Abstand) in Berücksichtigung der Dicke der Bordwand bzw. des Bordwandbrettes einzustellen. Ein definiert zur Dicke der Bordwand eingestellter Klemmspalt ermöglicht eine direkte Anlage des Klemmabschnittes des Hakenelementes an einer Seite der Bordwand bzw. des Bordwandbrettes und des distalen Kontaktendes, insbesondere der Kontaktkante des Einschubelementes an der dazu gegenüberliegenden Seite der Bordwand bzw. des Bordwandbrettes.

Es ist vorteilhaft ebenfalls möglich, dass das Verbindungselement einen zumindest abschnittsweise U-förmigen Querschnitt mit einem Gleitabschnitt und zwei sich vom Gleitabschnitt weg erstreckenden Wandungen aufweist, wobei der Gleitabschnitt das Einschubelement zumindest abschnittsweise kontaktiert. Der Gleitabschnitt ist dabei vorteilhaft der U-Grund, wobei die sich vom Gleitabschnitt weg erstreckenden Wandungen vorteilhaft die U-Schenkel darstellen. Das Verbindungselement ist über den Gleitabschnitt mit dem Einschubelement verbunden. Hierfür ist vorteilhaft eine Durchgangsöffnung im Gleitabschnitt ausgebildet, durch welchen ein sich ebenfalls durch Durchgangsöffnungen in den Wandungen des Einschubelementes erstreckender Bolzen zur Ermöglichung der Drehbewegung des Einschubelementes relativ zur Klemmbaugruppe erstreckt. Die Wandungen des Verbindungselementes erstrecken sich folglich zumindest abschnittsweise orthogonal zur Längsrichtung des Einschubelementes von dem Einschubelement weg, sobald die Klemmbaugruppe mit dem Einschubelement zur Erzeugung der Spannvorrichtung montiert ist.

Ebenfalls vorteilhaft denkbar ist, dass der Ausgleichsabschnitt des Hakenelementes derart gleitend auf dem Gleitabschnitt des Verbindungselementes zumindest abschnittsweise aufgenommen ist, dass das Hakenelement zumindest abschnittsweise in Verbindungselementlängsrichtung bewegbar ist Demnach liegt das Hakenelement, insbesondere der Ausgleichsabschnitt des Hakenelementes - in Berücksichtigung der Schwerkraft - gleitend auf dem Gleitabschnitt des Verbindungselementes. Das bedeutet, dass der Gleitabschnitt des Verbindungselementes - bei montierter Spannvorrichtung - zwischen dem Ausgleichsabschnitt des Hakenelementes und dem Einschubelement positioniert ist. Dies dient vorteilhaft für ein prozesssicheres und verkantungsfreies Bewegen bzw. Gleiten des Hakenelements entlang der Verbindungselementlängsrichtung (hin und zurück).

Entsprechend einer weiteren vorteilhaften Ausgestaltung ist - wie zuvor bereits erwähnt - am distalen Kontaktende des Einschubelementes wenigsten eine Verkantungskante ausgebildet, welche bei einem Auftreten einer selbstverstärkenden Klemmung derart in das Material der Bordwand eingreift, dass das Einschubelement mit der Bordwand verkantet, insbesondere selbstverstärkend verkantet ist. Das bedeutet, dass umso höher die auf den Zwischenwandverschluss wirkende Druckkraft ist, umso stärker wird die Verkantungswandung bzw. die Verkantungskante in das Material der Bordwand eingebracht. Vorteilhaft wird durch eine Anlage der eingebrachten Kraft auf eine Kante, insbesondere die Verkantungskante eine im Wesentlichen konzentrierte bzw. erhöhte Kraft auf diese Verkantungskante bzw. durch die Verkantungskante gebildete Linie aufgebracht. Dadurch wird ein ungewolltes Verrutschen des Zwischenwandverschlusses vermieden und ein ungewolltes Verrutschen des gesicherten und transportierten Gutes bzw. der zu sichernden und zu transportierenden Last verhindert.

Es ist des Weiteren denkbar, dass die Spannvorrichtung wenigstens eine Kontrolleinrichtung zumindest zur Überprüfung einer Einstellung der Spaltbreite des Klemmspaltes aufweist. Die Kontrolleinrichtung weist vorteilhaft zumindest ein wenigstens abschnittsweise bewegliches Kontrollelement und ein unbewegliches Kontrollgegenelement auf. Insbesondere ist das Kontrollelement relativ zur Klemmbaugruppe, insbesondere relativ zum Verbindungselement, zumindest abschnittsweise beweglich ausgestaltet. Das Kontrollgegenelement ist vorteilhaft unbeweglich relativ zur Klemmbaugruppe, insbesondere zum Verbindungselement, ausgebildet. Das Kontrollelement und das Kontrollgegenelement sind derart ausgebildet, dass beide in einer Wechselwirkung miteinander stehen. Das bedeutet, sobald das Kontrollelement mit dem Kontrollgegenelement in vorgegebener Weise interagiert, ist eine optimale (Vor-)Einstellung der Spaltbreite des Klemmspaltes in Berücksichtigung zur Dicke der Bordwand erfolgt. Vorteilhaft wird dadurch eine korrekte Positionierung der Spannvorrichtung des Zwischenwandverschlusses an der Bordwand ermöglicht. Diese korrekte Positionierung bedingt zudem zumindest eine hinreichende Klemmung der Spannvorrichtung und infolgedessen des Zwischenwandverschlusses an der Bordwand bei Betätigung des Hebelelementes. Vorteilhaft bedingt die genannte korrekte bzw. optimale Positionierung auch eine hinreichende Verkantung der Verkantungswandung an der Bordwand im Falle des Auftretens einer Kraft auf den Zwischenwandverschluss, beispielsweise bedingt durch ungewolltes Verrutschen der zu sichernden Last.

Gemäß einem zweiten Aspekt der Erfindung ist ein Zwischenwandverschluss beansprucht, welcher wenigstens eine Spannvorrichtung der vorgenannten Art aufweist. Es ist vorteilhaft denkbar, dass der Zwischenwandverschluss auch zwei Spannvorrichtungen der vorgenannten Art aufweist. Des Weiteren ist ein zumindest teilweise hohles Stangenprofil oder ein Vollmaterial-Stangenprofil mit einem Aufnahmeraum zur Aufnahme des Einschubelementes derart mit der wenigstens einen Spannvorrichtung verbunden, dass ein distaler Endabschnitt des Einschubelementes zumindest abschnittsweise in einen Aufnahmeraum des Stangenprofils aufgenommen und mit dem Stangenprofil teleskopierbar verbunden ist. Der Aufnahmeraum zum Aufnehmen des Einschubelementes, insbesondere zumindest einem Abschnitt des Einschubelementes, ist vorteilhaft an einem distalen Ende des Stangenprofils ausgebildet. Damit ist es möglich das Einschubelement zumindest teilweise in das Stangenprofil einzuschieben. Eine Verbindung des Stangenprofils und des Einschubelementes ist vorteilhaft in teleskopierbarer Weise möglich. Teleskopierbar bedeutet im Sinne der Erfindung, dass das Einschubelement innerhalb des Aufnahmeraums des Stangenprofils entlang eines definierten Verstellweges verschoben werden kann (in Längsrichtung des Stangenprofils). Dadurch wird vorteilhaft die Gesamtlänge des Zwischenwandverschlusses verstellbar bzw. an die Breite des Laderaums anpassbar gestaltet. Es ist des Weiteren denkbar, dass das Stangeprofil und das Einschubelement mittels eines Adapterelementes miteinander verbunden, vorteilhaft teleskopierbar verbunden sind. Das Adapterelement ist dabei beispielsweise derart ausgestaltet, dass es zumindest einen Abschnitt des Stangeprofils zumindest abschnittsweise aufnehmen, umgreifen oder in diesen eingebracht werden kann bzw. zumindest einen Abschnitt des Einschubelementes zumindest abschnittsweise aufnehmen, umgreifen oder in diesen eingebracht werden kann. Bei Vorliegen von zwei Spannvorrichtungen ist jeweils eine der Spannvorrichtungen an einem distalen Ende des Stangenprofils angeordnet. Das Stangenprofil und die wenigstens eine Spannvorrichtung bzw. die beidends am Stangenprofil angeordneten Spannvorrichtungen bilden einen Zwischenwandverschluss. Wird lediglich eine Spannvorrichtung eingesetzt, ist vorteilhaft am anderen distalen Ende des Stangenprofils eine Hakenvorrichtung zur Anbringung an eine Bordwand ausgebildet. Eine derartige Hakenvorrichtung findet sich in der EP 1880900B1 und weist kein Hebelelement auf.

Bei dem beschriebenen Zwischenwandverschluss ergeben sich sämtliche Vorteile, die bereits zu einer Spannvorrichtung gemäß dem ersten Aspekt der Erfindung beschrieben worden sind. Die zur Spannvorrichtung gemäß dem ersten Aspekt der Erfindung beschriebenen Merkmale und Ausgestaltungen können auch vollumfänglich zur Beschreibung des Zwischenwandverschlusses herangezogen werden und beschreiben folglich das Bauteil der Spannvorrichtung des Zwischenwandverschlusses in dessen Details.

Gemäß einem dritten Aspekt der Erfindung ist ein Verfahren der selbstverstärkenden Klemmung des Zwischenwandverschlusses gemäß dem zweiten Aspekt der Erfindung an einer Bordwand eines Fahrzeuges oder eines Fahrzeuganhängers beansprucht. Das Verfahren weist zumindest die nachfolgend aufgeführten Schritte auf:
a) Anbringen des Zwischenwandverschlusses an der Bordwand durch einen Bediener derart, dass die an den jeweiligen distalen Enden des Stangenprofils angeordneten Spannvorrichtungen mit den einander gegenüberliegenden Bordwänden fixiert werden, indem zumindest ein Abschnitt der jeweiligen Bordwand in den jeweiligen Klemmspalt der Spannvorrichtung eingebracht und die Breite des Klemmspaltes über eine Betätigung der Verstelleinrichtung an die Dicke der Bordwand angepasst wird,
b) Betätigen des Hebelelementes zum Fixieren der Bordwand zwischen dem Klemmabschnitt des Hakenelementes und dem distalen Kontaktende des Einschubelementes durch den Bediener,
c) Aufbringen einer Kraft auf das Stangenprofil des Zwischenwandverschlusses durch eine auf dem Fahrzeug oder dem Fahrzeuganhänger geladenen und transportierten Fracht, wobei das mit dem Stangenprofil verbundene Einschubelement dergestalt um die Drehachse ausgelenkt wird, dass der Klemmspalt zumindest an einem Abschnitt eine Klemmspaltverkleinerung derart erfährt, dass der Bereich des distalen Kontaktendes des Einschubelementes, bei welchem sich der Klemmspalt verkleinert, zumindest abschnittsweise in das Material der Bordwand eingreift und eine zusätzliche Verkantung des Einschubelementes in der Bordwand bedingt.

Unter dem Verfahren der selbstverstärkenden Klemmung des Zwischenwandverschlusses ist insbesondere auch die selbstverstärkende Klemmung der Spannvorrichtung an einer Bordwand zu verstehen, welche ein Bestandteil des Zwischenwandverschlusses ist. Insbesondere dient genau die Spannvorrichtung selbst dazu die selbstverstärkende Klemmung auszuführen.

Es ist zur Ermöglichung einer selbstverstärkenden Klemmung demnach erforderlich, dass die Spannvorrichtung des Zwischenwandverschlusses derart an der Bordwand angeordnet wird, dass nach Einstellung des Klemmspaltes in Berücksichtigung der Bordwanddicke sowie nach Erzeugung einer (ersten) Klemmung der Spannvorrichtung an der Bordwand durch Betätigung des Hebelelementes eine weitere die erste Klemmung noch verstärkende Klemmung stattfindet, sobald die zu transportierende und zu sichernde Last derart gegen den Zwischenwandverschluss drückt, dass eine Druckkraft auf diesen ausgeübt wird. Dadurch wird eine Verdrehung des Einschubelementes relativ zu Klemmbaugruppe erzeugt, durch welche das Einschubelement derart um eine Drehachse ausgelenkt wird, dass das distale Kontaktende des Einschubelementes, insbesondere die Verkantungswandung, auch Verkantungskante genannt, in das Material der Bordwand eingebracht wird, um ein Verrutschen der Spannvorrichtung und damit des Zwischenwandverschlusses und letztlich der gesamten zu sichernden Fracht zu verhindern.

Bei dem beschriebenen Verfahren ergeben sich sämtliche Vorteile, die bereits zu einer Spannvorrichtung gemäß dem ersten Aspekt sowie zu einem Zwischenwandverschluss gemäß dem zweiten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Eine Ausführungsform einer erfindungsgemäßen Spannvorrichtung sowie eine Ausführungsform eines erfindungsgemäßen Zwischenwandverschlusses werden nachfolgend anhand von Zeichnungen näher erläutert. Es zeigen jeweils schematisch:
- Figur 1: in einer Explosionszeichnung eine Ausführungsform einer erfindungsgemäßen Spannvorrichtung,
- Figur 2: in einer seitlichen Schnittdarstellung die in der Figur 1 gezeigte Ausführungsform der erfindungsgemäßen Spannvorrichtung,
- Figur 3: in einer perspektivischen Ansicht die in den Figuren 1 und 2 gezeigte Ausführungsform einer erfindungsgemäßen Spannvorrichtung,
- Figur 4: in einer perspektivischen Ansicht die in den Figuren 1 bis 3 gezeigte Ausführungsform einer erfindungsgemäßen Spannvorrichtung mit eingespannter bzw. eingeklemmter Bordwand,
- Figur 5: in einer Seitenansicht die in den Figuren 1 bis 4 gezeigte Ausführungsform einer erfindungsgemäßen Spannvorrichtung,
- Figur 6: in einer Draufsicht von oben die in den Figuren 1 bis 5 gezeigte Ausführungsform einer erfindungsgemäßen Spannvorrichtung,
- Figur 7: in einer Frontalansicht von vorn die in den Figuren 1 bis 6 gezeigte Ausführungsform einer erfindungsgemäßen Spannvorrichtung,
- Figur 8: in einer Draufsicht von unten die in den Figuren 1 bis 7 gezeigte Ausführungsform einer erfindungsgemäßen Spannvorrichtung mit eingespannter bzw. eingeklemmter Bordwand ohne Verdrehung,
- Figur 9: in einer Draufsicht von oben die in den Figuren 1 bis 8 gezeigte Ausführungsform einer erfindungsgemäßen Spannvorrichtung mit eingespannter bzw. eingeklemmter Bordwand ohne Verdrehung,
- Figur 10: in einer Draufsicht von unten die in den Figuren 1 bis 9 gezeigte Ausführungsform einer erfindungsgemäßen Spannvorrichtung mit eingespannter bzw. eingeklemmter Bordwand mit relativ zur Klemmbaugruppe verdrehtem Einschubelement,
- Figur 11: in einer Draufsicht von oben die in den Figuren 1 bis 10 gezeigte Ausführungsform einer erfindungsgemäßen Spannvorrichtung mit eingespannter bzw. eingeklemmter Bordwand mit relativ zur Klemmbaugruppe verdrehtem Einschubelement,
- Figur 12: in einer perspektivischen Ansicht eine weitere (zweite) Ausführungsform einer erfindungsgemäßen Spannvorrichtung mit einer Ausführungsform einer Kontrolleinrichtung,
- Figur 13: eine Vergrößerung des Ausschnittes A der Figur 12,
- Figur 14: in einer Draufsicht von oben einen Ausschnitt der in den Figuren 12 und 13 gezeigten weiteren Ausführungsform einer erfindungsgemäßen Spannvorrichtung mit ungenügend eingestellter Klemmspaltbreite,
- Figur 15: in einer Draufsicht von oben einen Ausschnitt der in den Figuren 12 und 13 gezeigten weiteren Ausführungsform einer erfindungsgemäßen Spannvorrichtung mit optimal eingestellter Klemmspaltbreite,
- Figur 16: in einer perspektivischen Ansicht eine weitere (dritte) Ausführungsform einer erfindungsgemäßen Spannvorrichtung mit einer weiteren (zweiten) Ausführungsform einer Kontrolleinrichtung,
- Figur 17: eine Vergrößerung des Ausschnittes B der Figur 16,
- Figur 18: in einer Draufsicht von oben einen Ausschnitt der in den Figuren 16 und 73 gezeigten weiteren Ausführungsform einer erfindungsgemäßen Spannvorrichtung mit ungenügend eingestellter Klemmspaltbreite,
- Figur 19: in einer Draufsicht von oben ein Ausschnitt der in den Figuren 16 und 17 gezeigten weiteren Ausführungsform einer erfindungsgemäßen Spannvorrichtung mit optimal eingestellter Klemmspaltbreite, und
- Figur 20: in einer Seitenansicht eine Ausführungsform eines erfindungsgemäßen Zwischenwandverschlusses mit zwei Spannvorrichtungen.

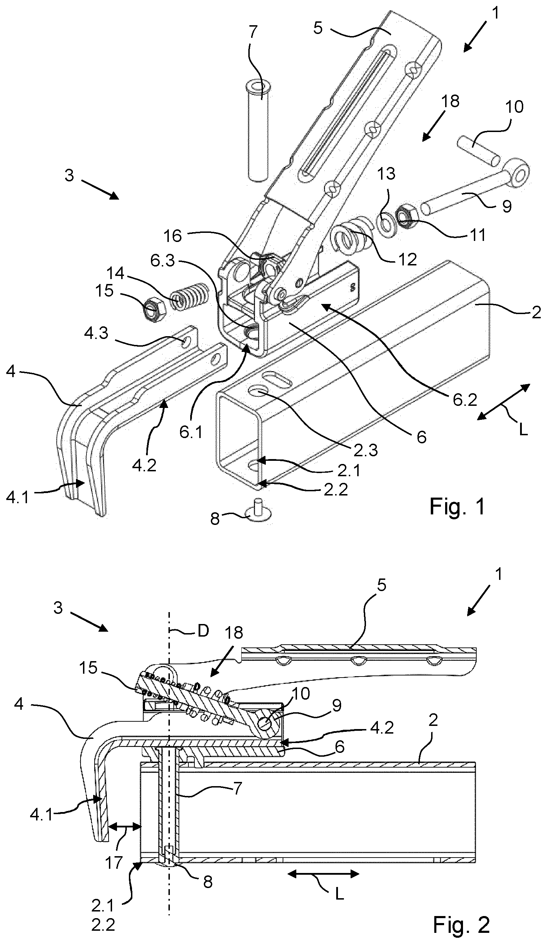

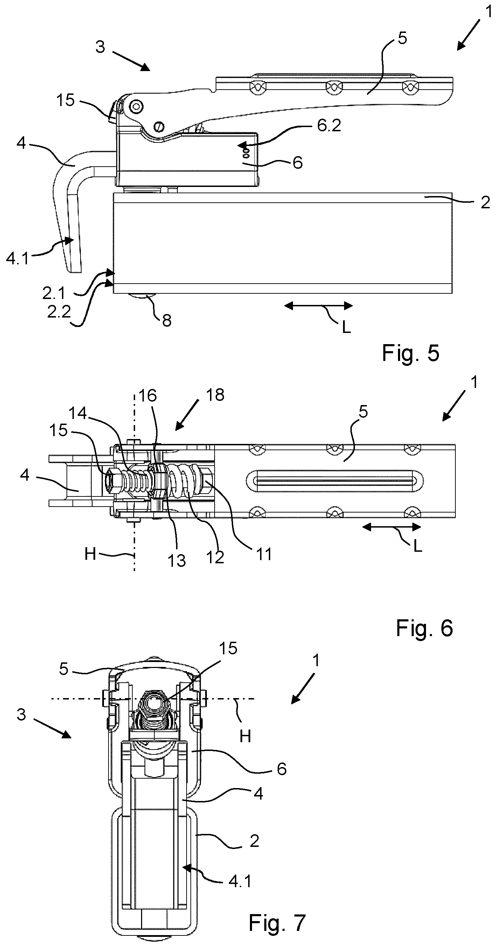

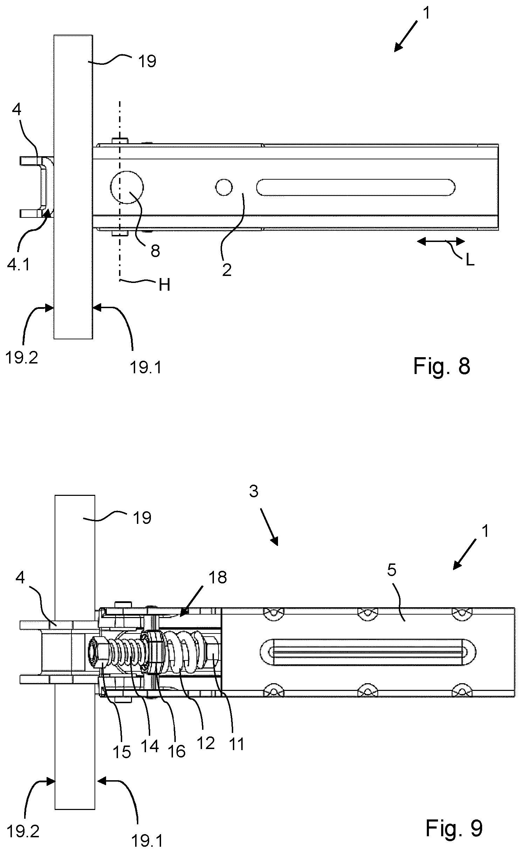

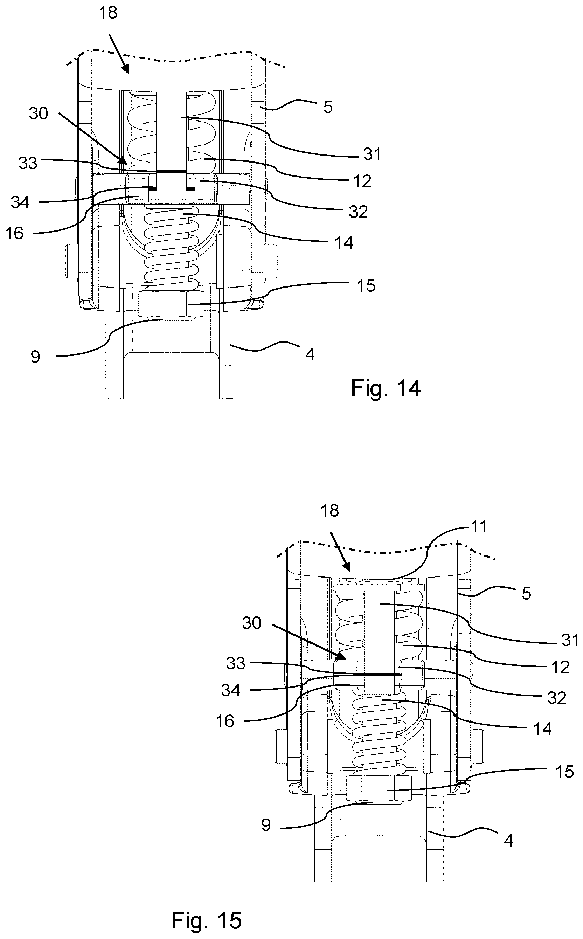

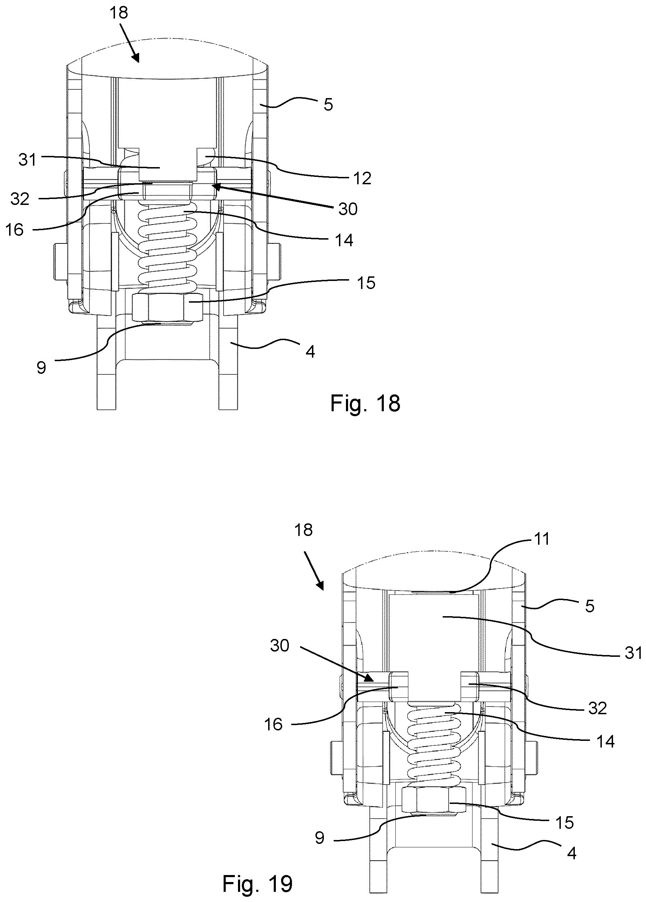

Elemente mit gleicher Funktion und Wirkungsweise sind in den Fig. 1 bis 20 jeweils mit denselben Bezugszeichen versehen.

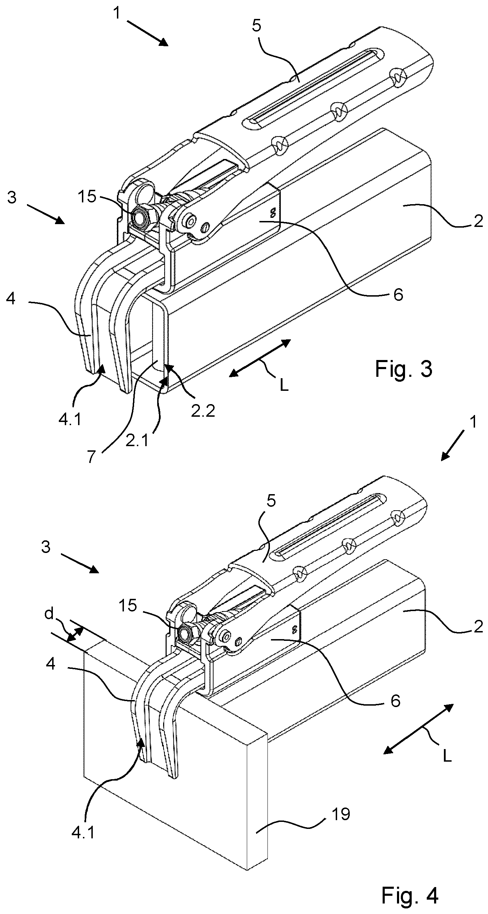

Basierend auf der Tatsache, dass in den Figuren 1 bis 11 eine Ausführungsform einer erfindungsgemäßen Spannvorrichtung entweder ohne Klemmung auf einer Bordwand (Figuren 1, 2, 3, 5, 6, 7) oder mit eingeklemmter Bordwand (Figuren 4, 8, 9, 10, 11) gezeigt ist, werden die Figuren 1 bis 11 im Wesentlichen gemeinsam beschrieben. Bei Unterschieden werden die betreffenden Figuren separat genannt.

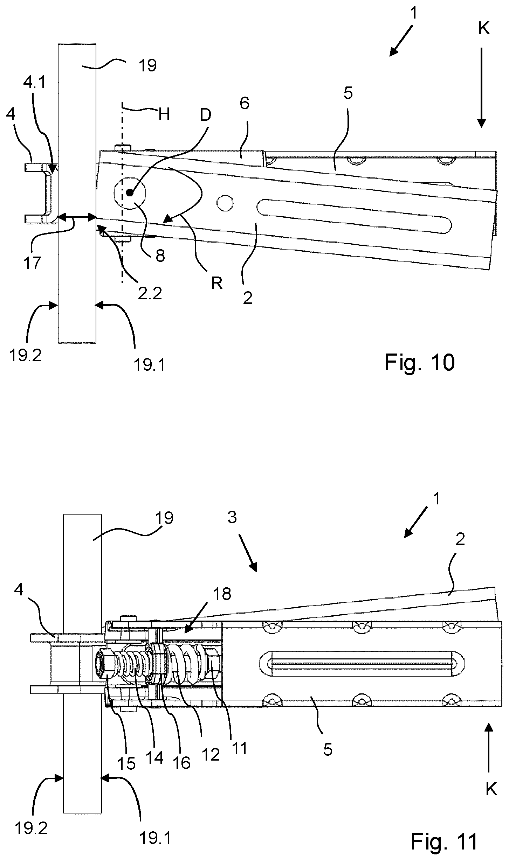

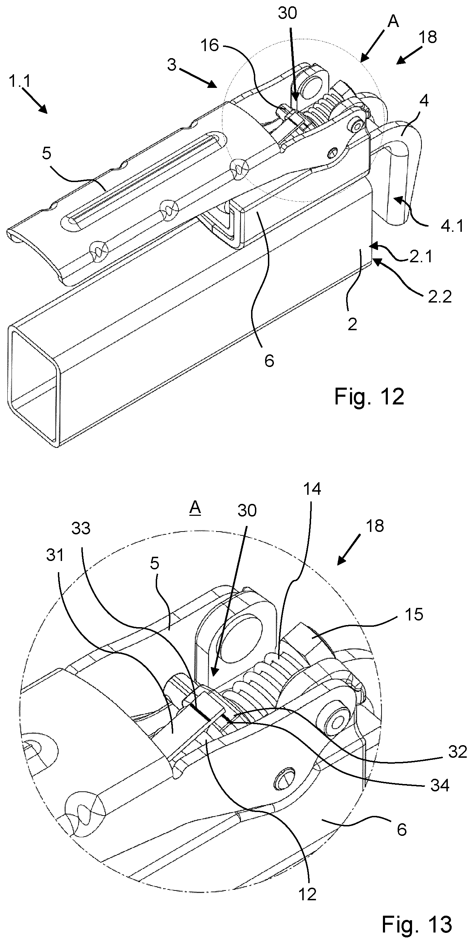

So zeigen die Figuren 1 bis 11 eine Ausführungsform einer erfindungsgemäßen Spannvorrichtung 1. Die Spannvorrichtung 1 weist ein Einschubelement 2 sowie eine Klemmbaugruppe 3 auf. Die Klemmbaugruppe 3 umfasst vorteilhaft eine Verstelleinrichtung 18 sowie ein Hakenelement 4, ein Hebelelement 5 und ein Verbindungselement 6. Das Einschubelement 2 ist in Gestalt eines stangenartigen Hohlprofils mit im Wesentlichen viereckigem, insbesondere rechteckigem Querschnitt ausgebildet. Es ist jedoch auch denkbar, dass das Einschubelement 2 einen im Wesentlichen quadratischen oder mehreckigen Querschnitt aufweist und/oder in Gestalt eines Vollmaterialprofils ausgestaltet ist. Es ist des Weiteren denkbar, dass das Einschubelement 2 lediglich abschnittsweise als Hohlprofil und abschnittsweise als Vollmaterialprofil ausgebildet ist. Das Einschubelement 2 dient vorteilhaft dazu eine Verbindung mit einem Balkenprofil bzw. Stangenprofil (vgl. Figur 12) zur Herstellung eines Zwischenwandverschlusses zu ermöglichen. Zur detaillierten Ausgestaltung des Zwischenwandverschlusses wird ebenfalls auf die Figurenbeschreibung zur Figur 12 verwiesen. Des Weiteren weist das Einschubelement 2 ein distales Kontaktende 2.1 auf, welches eine Verkantungswandung 2.2 bzw. eine Verkantungskante 2.2 umfasst. Die Verkantungskante 2.2 ist diejenige Kante des distalen Kontaktendes 2.1, welche sich bei einer Drehung oder Auslenkung (Rotation) des Einschubelementes 2 relativ zur Klemmbaugruppe 3 in das Material der Bordwand 19 zumindest abschnittsweise eindrückt. Dies zeigt sich insbesondere in der Figur 10. In der Figur 10 ist der Vorgang ersichtlich, dass beispielsweise eine auf einem Fahrzeug oder Fahrzeuganhänger mittels eines Zwischenwandverschlusses 20 gemäß Figur 12 gegen ungewolltes Verrutschen gesicherte Last mit einer Druckkraft K, wie in der Figur 10 angedeutet, gegen das Stangenprofil 21 des Zwischenwandverschlusses 20 (vgl. Figur 12) drückt bzw. gedrückt wird. Die auf das Stangenprofil 21 des Zwischenwandverschlusses 20 wirkende Druckkraft K erzeugt die Drehung des mit dem Stangenprofil 21 verbundenen Einschubelementes 2 um die Drehachse D in Drehrichtung R. Das bedeutet, dass basierend auf der Druckkraft K das Einschubelement 2 ausgelenkt bzw. gedreht wird, um so zum einen der Druckkraft D zumindest teilweise nachzugeben, um eine Beschädigung des Zwischenwandverschlusses 20 zu vermeiden und um zum anderen ein Eindrücken bzw. Eingreifen des distalen Kontaktendes 2.1, insbesondere der Verkantungskante 2.2 des distalen Kontaktendes 2.1 in eine Verkantungsoberfläche 19.1 der Bordwand 19 zu ermöglichen. Dieses Verkanten des distalen Kontaktendes 2.1, insbesondere der Verkantungskante 2.2 des distalen Kontaktendes 2.1, wird im Rahmen der Erfindung als selbstverstärkende Klemmung der Spannvorrichtung 1 bezeichnet. Beim Verdrehen des Einschubelementes 2 um die Drehachse D wird der Klemmspalt 17 derart verändert, dass die Klemmspaltbreite in einem Bereich verkleinert und in einem anderen Bereich vergrößert wird. Das zeigt sich insbesondere in der Figur 10. Die Klemmspaltbreite des Klemmspaltes 17 wird insbesondere in dem sich zwischen der sich verkantenden Verkantungskante 2.2 und dem Klemmabschnitt 4.1 des Hakenelementes 4 bestehenden Abschnittes des Klemmspaltes 17 verkleinert. Die Klemmspaltbreite des Klemmspaltes 17 wird in dem Abschnitt zwischen dem Klemmabschnitt 4.1 des Hakenelementes 4 und der zur Verkantungskante 2.2 gegenüberliegenden Kante des Einschubelementes 2 vergrößert. Die der Verkantungsoberfläche 19.1 gegenüberliegende Oberfläche der Bordwand 19 wird im Rahmen der Erfindung als Kontaktoberfläche 19.2 bezeichnet. Die Kontaktoberfläche 19.2 wird vorteilhaft von dem Klemmabschnitt 4.1 des Hakenelementes 4 zumindest abschnittsweise kontaktiert. Bei einer wirkenden selbstverstärkenden Klemmung, wie zuvor beschrieben, erfolgt jedoch vorteilhaft kein Eingreifen oder Eindringen des Klemmabschnittes 4.1 in das Material der Bordwand 19 im Bereich der Kontaktoberfläche 19.2. Diese Kontaktoberfläche 19.2 bleibt folglich vorteilhaft verkantungsfrei.

Vor Ermöglichung der selbstverstärkenden Klemmung der Spannvorrichtung 1 ist es erforderlich die Spanneinrichtung 1 an der Bordwand 19 anzuordnen, insbesondere derart zu fixieren bzw. zu verspannen, dass ein Bewegen bzw. Verschieben des Zwischenwandverschlusses 20 entlang der Bordwand 19 durch den Bediener selbst nicht mehr durchgeführt werden kann. Hierzu dient die Klemmbaugruppe 3, welche ebenfalls in den Figuren 1 bis 11 aufgezeigt ist. Die Klemmbaugruppe 3 weist ein Hebelelement 5 und ein mit dem Hebelelement 5 über ein Verbindungselement 6 wirkverbundenes Hakenelement 4 auf. Des Weiteren umfasst die Klemmbaugruppe 3 eine Verstelleinrichtung 18, welche über das Hebelelement 5 in Wirkverbindung mit dem Hakenelement 4 steht. Die Verstelleinrichtung 18 dient vorteilhaft dazu einen Klemmspalt 17 hinsichtlich dessen Klemmspaltgröße zu verändern. Der Klemmspalt 17 ist der Spalt bzw. Abstand, welcher zwischen dem Einschubelement 2, insbesondere dem distalen Kontaktende 2.1 des Einschubelementes 2 und dem Hakenelement 4, insbesondere dem Klemmabschnitt 4.1 des Hakenelementes 4, gebildet ist. Das Hakenelement 4 weist einen Klemmabschnitt 4.1 sowie einen winklig, im Wesentlichen rechtwinklig, zum Klemmabschnitt 4.1 ausgebildeten Ausgleichsabschnitt 4.2 auf. Der Klemmabschnitt 4.1 und der Ausgleichsabschnitt 4.2 bilden ein im Wesentlichen L-förmiges Hakenelement 4. Der Ausgleichsabschnitt 4.2 ist beweglich, insbesondere gleitend beweglich zumindest abschnittsweise im Verbindungselement 6 aufgenommen. Das Verbindungselement 6 weist einen im Wesentlichen zumindest abschnittsweise U-förmigen Querschnitt auf und umfasst zumindest einen Gleitabschnitt 6.1 sowie zwei sich im Wesentlichen parallel zueinander von dem Gleitabschnitt 6.1 weg erstreckende Wandungen 6.2. Das Verbindungselement 6 weist eine sich in Längsrichtung L erstreckende Länge auf, welche größer als dessen Breite oder Höhe ist. Die Wandungen 6.2 können einen oder mehrere Vorsprünge, Nasen oder Befestigungsabschnitte haben, um beispielsweise ein einfaches und prozesssicheres Gleiten des Hakenelementes 4 zu ermöglichen (Rausrutschen des Hakenelementes 4 aus dem Verbindungselement 6 wird verhindert) und/oder um eine bewegliche Befestigung bzw. Anordnung des Hebelelementes 5 am Verbindungselement 6 zu realisieren. Der Ausgleichsabschnitt 4.2 ist zumindest teilweise derart zwischen den Wandungen 6.2 des Verbindungselementes 6 aufgenommen, dass dieser den Gleitabschnitt 6.1 zumindest teilweise kontaktiert und wenigstens abschnittweise entlang diesem gleitend bewegt werden kann. Das Hakenelement 4 ist mit der Verstelleinrichtung 18 wirkverbunden. Die Verstelleinrichtung 18 weist dazu vorteilhaft zumindest einen sich durch ein Schraubenelement 9, insbesondere ein Ring- oder Ösenschraubenelement erstreckenden Stift 10 auf. Der Stift 10 ist in den Öffnungen bzw. Durchgangsöffnungen 4.3 des Hakenelementes 4 fixiert. Das Schraubenelement 9 (ebenfalls Bestandteil der Verstelleinrichtung 18) erstreckt sich durch ein Führungselement 16 des Hebelelementes 5. Das Führungselement 16 ist beispielsweise in Form eines Ringes ausgebildet und am Hebelelement 5 vorteilhaft drehbar fixiert oder einteilig mit dem Hebelelement 5 ausgebildet. Eine Justiermutter 11 sowie ein (erstes) Federelement 12, insbesondere ein (erstes) Druckfederelement 12 sowie eine Scheibe 13 sind an dem Schraubenelement 9 einerseits des Führungselements 16 angeordnet. An der anderen Seite zum Führungselement 16 sind ein (zweites) Federelement 14, insbesondere ein (zweites) Druckfederelement 14 und eine Mutter 15 auf dem Schraubenelement 9 angeordnet. Erfolgt eine Betätigung der Justiermutter 11 erfolgt gleichzeitig auch eine Verstellung der Breite des Klemmspaltes 17. Das bedeutet, sobald die Justiermutter 11 festgedreht wird, wird auch das zweite Federelement 14, welches vorteilhaft ein Federelement mit geringerer Federkraft als das erste Federelement 12 ist, zusammendrückt, wodurch der Stift weg vom Führungselement 16 bewegt wird. Das mit dem Stift 10 verbundene Hakenelement 4 wird demzufolge ebenfalls bewegt, und zwar derart, dass der Ausgleichsabschnitt 4.2 entlang des Gleitabschnittes 6.1 gleitet und der Klemmabschnitt 4.2 zum Einschubelement 2, insbesondere zu dem distalen Kontaktende 2.1 des Einschubelementes hinbewegt wird. Dadurch verkleinert sich der Klemmspalt 17. Eine Veränderung des Klemmspaltes 17 hinsichtlich dessen Größe, insbesondere Länge ist erforderlich, um diesen an die Dicke d der Bordwand 19 anzupassen. Erst durch eine Anpassung des Klemmspaltes 16 an die Dicke der Bordwand 19 ist eine hinreichende Klemmung der Spannvorrichtung 1 zu gewährleisten, welche insbesondere mittels des Hebelelementes 5 ermöglicht wird. Bei einer Drehung der Justiermutter 11 in die entgegengesetzte Drehrichtung wird demnach die gegensätzliche Bewegung des Hakenelementes 4 erzeugt.

Das Hebelelement 5 ist beweglich, insbesondere drehbeweglich um eine Hebelachse H an dem Verbindungselement 6 angeordnet. Hierdurch wird eine Kraftaufbringung auf das Hebelelement 5, ohne dieses in eine ungewünschte Position zu verschieben, gewährleistet. Wird das Hebelelement 5 betätigt und folglich von einem Bediener in Richtung des Verbindungselementes 6 gedrückt, wird eine Druckkraft vom Führungselement 16 auf das erste Federelement 12 und die Justiermutter 11 sowie das mit der Justiermutter 11 verbundene Schraubenelement 9 ausgeübt. Hierdurch wird der mit dem Hakenelement 4.3 verbundene Stift 10 (wirkverbunden mit dem Schraubenelement 9) entlang der Längsrichtung des Verbindungselementes 6, insbesondere entlang des Gleitabschnittes 6.1 des Verbindungelementes vom distalen kontaktende 2.1 des Einschubelementes 2 wegbewegt. Das bedeutet, dass der Ausgleichsabschnitt 4.2 entlang des Gleitabschnittes 6.1 derart gleitet, dass der Klemmabschnitt 4.1 in Richtung des Einschubelementes 2, insbesondere in Richtung des distalen Kontaktendes 2.1 des Einschubelementes 2 bewegt wird. Dadurch wird die Bordwand 19 zwischen dem Klemmabschnitt 4.1 des Hakenelementes 4 und dem distalen Kontaktende 2.1 des Einschubelementes 2 eingespannt. Dies ist insbesondere in den Figuren 4 sowie 8 und 9 gezeigt. Beim Lösen des Hebelelements 5 erfolgt die rückwärtige Bewegung und das Hakenelement 4 verschiebt sich derart, dass der Klemmspalt 17 vergrößert wird, sodass die Spannvorrichtung 1 von der Bordwand 19 entnommen werden kann.

Die insbesondere in den Figuren 10 und 11 gezeigte selbstverstärkende Klemmung der Spannvorrichtung 1 an der Bordwand 19 wird durch die bereits beschriebene Drehung des Einschubelementes 2 relativ zur Klemmbaugruppe 3 ermöglicht. Erforderlich ist hierfür auch der zweiteilige Aufbau hinsichtlich Einschubelement 2 und Klemmbaugruppe 3, bei welchem die Klemmbaugruppe 3 vollständig außerhalb bzw. an einer Außenseite des Einschubelementes 2 angeordnet ist. Das bedeutet, dass kein Bauteil der Klemmbaugruppe 3 innerhalb bzw. im Einschubelement 2 (auch nicht nur teilweise) angeordnet ist. Beide Bestandteile der Spannvorrichtung 1 sind demnach in einfacher Weise miteinander verbindbar. Dazu dient vorteilhaft ein Bolzen 7, insbesondere ein Nietbolzen 7 und ein Niet 8. Der Bolzen 7 wird durch in zwei Wandungen des Einschubelementes 2 eingebrachten Durchgangsbohrungen 2.3 sowie durch eine Durchgangsbohrung 6.3 des Verbindungselementes 6 geführt und verlustsicher insbesondere durch das Niet 8 beispielsweise einseitig des Einschubelementes 2 gesichert. Demzufolge ist die gesamte Klemmbaugruppe 3, durch welche die Verstellung des Klemmspaltes 17 sowie die Fixierung der Spannvorrichtung 1 mittels Hebelelement 5 ermöglicht wird, über das Verbindungselement 6 mit dem Einschubelement 2 drehbar relativ zum Einschubelement 2 verbunden. Anstelle des genannten Bolzens 7 können auch anderweitige Verbindungsmittel, wie Stifte, Schrauben oder vergleichbares verwendet werden, welche eine relative Drehung der Klemmbaugruppe 3, insbesondere des Verbindungselementes 6 zum Einschubelement 2 ermöglichen.

Die in den Figuren 12 bis 15 gezeigte weitere (zweite) Ausführungsform einer erfindungsgemäßen Spannvorrichtung 1.1 unterscheidet sich von der in den Figuren 1 bis 11 gezeigten Ausführungsform einer erfindungsgemäßen Spannvorrichtung 1 lediglich durch die Ergänzung einer Kontrolleinrichtung 30. Die übrigen zu der in den Figuren 1 bis 11 aufgeführten Merkmale und dazugehörigen Beschreibungen zur Spannvorrichtung 1 gelten auch für die in den Figuren 12 bis 15 aufgezeigten Spannvorrichtung 1.1 und können folglich vollumfänglich hier mit einbezogen werden. Eine erneute (doppelte) Benennung und Erläuterung dieser Merkmale und deren Wirkungsweisen wird dadurch vermieden. Die Kontrolleinrichtung 30 weist zumindest ein Kontrollelement 31 sowie zumindest ein Kontrollgegenelement 32 auf.

Das Kontrollelement 31 ist vorteilhaft beweglich zumindest relativ zum Verbindungselement 6, insbesondere relativ zur Klemmbaugruppe 3 ausgebildet. Vorteilhaft ist das Kontrollelement 31 zumindest abschnittsweise entlang des Schraubenelementes 9 beweglich. Das Kontrollelement 31 ist besonders vorteilhaft beweglich relativ zum Schraubenelement 9 mit dem Schraubenelement 9 verbunden. Es ist denkbar, dass das Schraubenelement 9 sich zumindest abschnittsweise durch einen Abschnitt, insbesondere einen Befestigungsabschnitt, des Kontrollelementes 31 hindurch erstreckt, insbesondere durch eine in den Figuren 12 bis 15 nicht gezeigte Durchgangsöffnung. Der Befestigungsabschnitt ist beispielsweise zwischen der Justiermutter 11 und der Scheibe 13 positioniert bzw. dazwischen eingeklemmt. Das in den Figuren 12 bis 15 gezeigte Kontrollelement 31 ist zumindest abschnittsweise in Gestalt eines Streifens, insbesondere eines Blechstreifens ausgebildet. Das Kontrollelement 31 erstreckt sich zumindest abschnittsweise ausgehend von der Justiermutter 11 entlang des Schraubenelementes 9 in Richtung des Führungselementes 16. Vorteilhaft überdeckt das Kontrollelement 31 in jeder Position das erste Federelement 12 hinsichtlich dessen Federlänge vollständig. Als Positionen werden im Rahmen der Erfindung die Anordnungen der Spannvorrichtung 1.1 an einer Bordwand verstanden. Das bedeutet, dass die Spannvorrichtung 1.1 in ungenügender Weise an der Bordwand angeordnet sein kann, was einer Position der Spannvorrichtung entspricht (ungenügende Position bzw. Positionierung) oder dass die Spannvorrichtung 1.1 in optimaler Weise an der Bordwand angeordnet ist, was einer anderen Position bzw. Positionierung entspricht (optimale Position bzw. optimale Positionierung). Eine ungenügende Positionierung der Spannvorrichtung 1.1 an der Bordwand findet beispielsweise statt, wenn der Klemmabschnitt 4.1 des Hakenelementes 4 bzw. das distale Kontaktende 2.1 des Einschubelementes 2 nicht an der Bordwand anliegen bzw. diese nicht zumindest abschnittsweise kontaktieren. Eine entsprechende optimale Positionierung liegt demnach vor, wenn der Klemmabschnitt 4.1 des Hakenelementes 4 bzw. das distale Kontaktende 2.1 des Einschubelementes 2 zumindest abschnittsweise an der Bordwand anliegen bzw. diese zumindest abschnittsweise kontaktieren. Diese Kontaktierung von Klemmabschnitt 4.1 bzw. distalem Kontaktende 2.1 mit der Bordwand wird vorteilhaft durch die Einstellung des Klemmspaltes 17, insbesondere dessen Spaltbreite ermöglicht. Hierfür dient, wie bereits zur Ausführungsform einer erfindungsgemäßen Spannvorrichtung 1 gemäß den Figuren 1 bis 11 erläutert, die Verstelleinrichtung 18.

Wird, wie in den Figuren 12 bis 15 gezeigt, die Verstelleinrichtung 18 derart betätigt, dass die Justiermutter 11 festgeschraubt (in Richtung des Führungselementes 16 gedreht) wird, dann erfolgt die Kompression des zweiten Federelementes 14. Dadurch wird das Schraubenelement 9 derart bewegt, dass der Stift 10 sich vom Führungselement 16 entfernt und die Mutter 15 auf das Führungselement zuwandert. Infolgedessen wird der Klemmabschnitt 4.1 in Richtung des distalen Kontaktendes 2.1 bewegt, Hierdurch wird die Spaltbreite (Klemmspaltbreite) des Klemmspaltes 17 verringert. Dies kann bei Anordnung der Spannvorrichtung 1.1 an der Bordwand zu einer gewünschten Kontaktierung des Klemmabschnittes 4.1 sowie des distalen Kontaktendes 2.1 mit der Bordwand führen. Gleichzeitig verringert sich aber auch der Abstand zwischen der Justiermutter 11 und dem Führungselement 16. Dadurch wird das Kontrollelement 31 in Richtung des Führungselementes 16 bewegt.

Wie in den Figuren 12 bis 15 ersichtlich, befindet sich das Kontrollgegenelement 32 sichtbar von oben am bzw. auf dem Führungselement 16. Es ist beispielsweise in Form einer Linie, Strich oder einer Markierung 34 ausgebildet. Es kann auch als Materialaufwurf, Vertiefung etc. ausgebildet sein. Das Kontrollelement 31 kann ebenfalls eine Linie, Strich, Markierung 33 etc. aufweisen. Die nun zuvor genannte Bewegung des Kontrollelementes 31 in Richtung des Führungselementes 16 führt im optimalen Fall zu einer Überdeckung der beiden Markierungen 33 und 34 (des Kontrollelementes 31 sowie des Kontrollgegenelementes 32). Findet eine Überdeckung beider Markierung 33 und 34 statt, liegt eine optimale Anordnung der Spannvorrichtung 1.1 an der Bordwand vor. Dies zeigt sich beispielsweise vorteilhaft bei der Verklemmung der Spannvorrichtung 1.1 mit der Bordwand über die Betätigung des Hebelelementes 5, um eine ausreichende Klemmkraftwirkung zu erzielen. Liegt, insbesondere nach der Verklemmung der Spannvorrichtung 1.1 mit der Bordwand keine Überdeckung der Markierungen 33 und 34 vor, muss nachjustiert werden. Wurde die Justiermutter 11 dagegen derart betätigt, dass die Markierung 33 des Kontrollelementes 31 die Markierung 34 des Kontrollgegenelementes 32 bzw. das Kontrollgegenelement 32 "überfahren" hat, liegt ebenfalls keine optimale Positionierung der Spannvorrichtung 1.1, sondern vielmehr ein zu eng bzw. zu klein eingestellter Klemmspalt 17 vor, der eine erforderliche Klemmung der Spannvorrichtung 1.1 über das Hebelelement 5 zumindest unnötig erschwert oder zur Beschädigung von Bordwand und/oder Zwischenwandverschluss führt. Auch in diesem Fall ist eine Nachjustierung über die Justiermutter 11 erforderlich (Justiermutter 11 muss wieder aufgeschraubt werden).

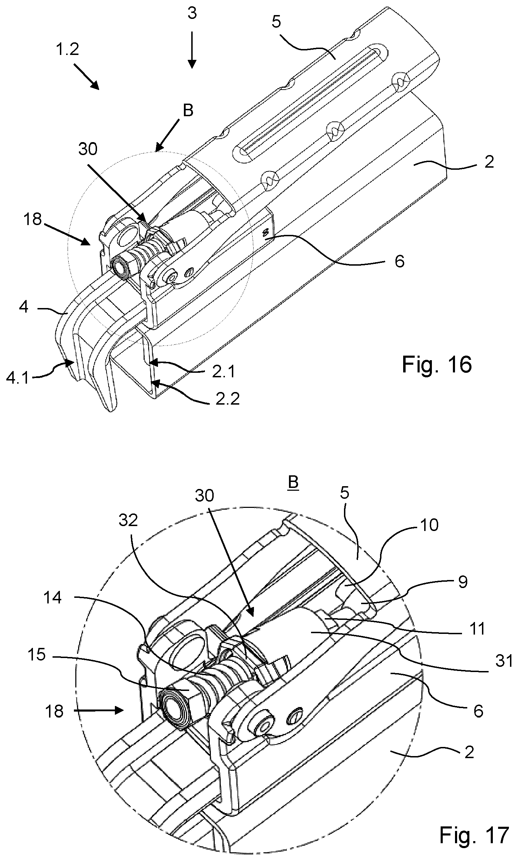

Die in den Figuren 16 bis 19 gezeigte weitere (dritte) Ausführungsform einer erfindungsgemäßen Spannvorrichtung 1.2 unterscheidet sich von der in den Figuren 1 bis 11 gezeigten Ausführungsform einer erfindungsgemäßen Spannvorrichtung 1 lediglich durch die Ergänzung einer Kontrolleinrichtung 30 bzw. von der in den Figuren 12 bis 15 gezeigten Ausführungsform einer erfindungsgemäßen Spannvorrichtung 1.1 lediglich durch die Ausgestaltung der Kontrolleinrichtung 30. Die übrigen zu der in den Figuren 1 bis 11 aufgeführten Merkmale und dazugehörigen Beschreibungen zur Spannvorrichtung 1 gelten auch für die in den Figu-ren 16 bis 19 aufgezeigten Spannvorrichtung 1.2 und können folglich vollumfänglich hier mit einbezogen werden. Eine erneute (doppelte) Benennung und Erläuterung dieser Merkmale und deren Wirkungsweisen wird dadurch vermieden. Die Kontrolleinrichtung 30 weist zumindest ein Kontrollelement 31 sowie zumindest ein Kontrollgegenelement 32 auf. Das Kontrollelement 31 ist vorteilhaft beweglich zumindest relativ zum Verbindungselement 6, insbesondere relativ zur Klemmbaugruppe 3 ausgebildet. Vorteilhaft ist das Kontrollelement 31 zumindest abschnittsweise entlang des Schraubenelementes 9 beweglich. Das Kontrollelement 31 ist besonders vorteilhaft beweglich relativ zum Schraubenelement 9 mit dem Schraubenelement 9 verbunden. Es ist denkbar, dass das Schraubenelement 9 sich zumindest abschnittsweise durch einen Abschnitt, insbesondere einen Befestigungsabschnitt des Kontrollelementes 31 hindurch erstreckt, insbesondere durch eine in den Figuren 16 bis 19 nicht gezeigte Durchgangsöffnung. Der Befestigungsabschnitt ist beispielsweise zwischen der Justiermutter 11 und der Scheibe 13 positioniert bzw. dazwischen eingeklemmt. Das in den Figuren 16 bis 19 gezeigte Kontrollelement 31 ist zumindest abschnittsweise in Gestalt einer Hülse, insbesondere einer Kunststoff- oder Metallhülse ausgebildet. Das Kontrollelement 31 erstreckt sich zumindest abschnittsweise ausgehend von der Justiermutter 11 entlang des Schraubenelementes 9 in Richtung des Führungselementes 16. Vorteilhaft überdeckt das Kontrollelement 31 in jeder Position das erste Federelement 12 hinsichtlich dessen Federlänge zumindest abschnittsweise, vorteilhaft vollständig. Aufgrund der Ausgestaltung des Kontrollelementes 31 in Gestalt einer Hülse ist es vorteilhaft auch möglich, dass beispielsweise zum Schutz des Federelementes 12 das Kontrollelement 31 das Federelement 12 auch zumindest teilweise umschließt. Als Positionen werden im Rahmen der Erfindung die Anordnungen der Spannvorrichtung 1.2 an einer Bordwand verstanden. Das bedeutet, dass die Spannvorrichtung 1.2 in ungenügender Weise an der Bordwand angeordnet sein kann, was einer Position der Spannvorrichtung 1.2 entspricht (ungenügende Position bzw. Positionierung) oder dass die Spannvorrichtung 1.2 in optimaler Weise an der Bordwand angeordnet ist, was einer anderen Position bzw. Positionierung entspricht (optimale Position bzw. optimale Positionierung). Eine ungenügende Positionierung der Spannvorrichtung 1.2 an der Bordwand findet beispielsweise statt, wenn der Klemmabschnitt 4.1 des Hakenelementes 4 bzw. das distale Kontaktende 2.1 des Einschubelementes 2 nicht an der Bordwand anliegen bzw. diese nicht zumindest abschnittsweise kontaktieren, insbesondere eine zu geringe Vorspannung vorliegt. Eine entsprechende optimale Positionierung liegt demnach vor, wenn der Klemmabschnitt 4.1 des Hakenelementes 4 bzw. das distale Kontaktende 2.1 des Einschubelementes 2 zumindest abschnittsweise an der Bordwand anliegen bzw. diese zumindest abschnittsweise kontaktieren. Diese Kontaktierung von Klemmabschnitt 4.1 bzw. distalem Kontaktende 2.1 mit der Bordwand wird vorteilhaft durch die Einstellung des Klemmspaltes 17, insbesondere dessen Spaltbreite ermöglicht. Hierfür dient, wie bereits zur Ausführungsform einer erfindungsgemäßen Spannvorrichtung 1 gemäß den Figuren 1 bis 11 erläutert, die Verstelleinrichtung 18.

Wird, wie in den Figuren 16 bis 19 gezeigt, die Verstelleinrichtung 18 derart betätigt, dass die Justiermutter 11 festgeschraubt (in Richtung des Führungselementes 16 gedreht) wird, dann erfolgt die Kompression des zweiten Federelementes 14. Dadurch wird das Schraubenelement 9 derart bewegt, dass der Stift 10 sich vom Führungselement 16 entfernt und die Mutter 15 auf das Führungselement zuwandert. Infolgedessen wird der Klemmabschnitt 4.1 in Richtung des distalen Kontaktendes 2.1 bewegt, hierdurch wird die Spaltbreite (Klemmspaltbreite) des Klemmspaltes 17 verringert. Dies kann bei Anordnung der Spannvorrichtung 1.2 an der Bordwand zu einer gewünschten Kontaktierung des Klemmabschnittes 4.1 sowie des distalen Kontaktendes 2.1 mit der Bordwand führen. Bei der Betätigung des Hebelelementes 5 verringert sich aber auch der Abstand zwischen der Justiermutter 11 und dem Führungselement 16. Dadurch wird das Kontrollelement 31 in Richtung des Führungselementes 16 bewegt.

Das Kontrollgegenelement 32 wird bei der Ausführungsform gemäß den Figuren 16 bis 19 durch das Führungselement 16 selbst gebildet. Wird das Kontrollelement 31 nun derart weit in Richtung des Führungselementes 16 bewegt, dass ein distales Ende des Kontrollelementes 31 derart bündig mit dem Führungselement 16 abschließt, dass das Führungselement 16 bzw. in diesem Fall das Kontrollgegenelement 32 - bei einer Betrachtung von oben auf die Spannvorrichtung 1.2. - vollständig von dem Kontrollelement 31 abgedeckt ist, liegt eine optimale Einstellung der Klemmspaltbreite des Klemmspaltes 17 vor. Dabei darf bei der ausführenden Verklemmung der Spannvorrichtung 1.2 über das Hebelelement 5 das Kontrollelement nicht über das Kontrollgegenelement 32 hinausragen, da ansonsten die Klemmspaltbreite zu eng eingestellt ist. Dies kann zu einer ungewollten Beschädigung der Bordwand und/oder des Zwischenwandverschlusses bzw. der Spannvorrichtung 1.2 führen.

Dank der einfachen Ausgestaltung der Kontrolleinrichtung 30 ist eine Kontrolle der optimalen Anordnung der Spannvorrichtung 1.1 bzw. 1.2 eines Zwischenwandverschlusses an einer Bordwand durch beispielsweise den Bediener in einfacher, kostengünstiger und prozesssicherer Weise möglich.

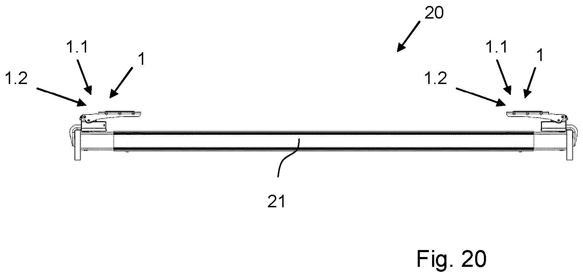

In der Figur 20 ist eine Ausführungsform eines Zwischenwandverschlusses 20 gezeigt. Der Zwischenwandverschluss 20 weist ein Stangenprofil 21 sowie an beiden Enden des Stangenprofils 21 angeordnete Spannvorrichtungen 1, 1.1, 1.2 auf. Die Spannvorrichtungen 1, 1.1, 1.2 entsprechen der in den Figuren 1 bis 11 aufgeführten Ausführungsform einer erfindungsgemäßen Spannvorrichtung 1 oder der in den Figuren 12 bis 15 aufgeführten Ausführungsform einer erfindungsgemäßen Spannvorrichtung 1.1 oder der in den Figuren 16 bis 19 aufgeführten Ausführungsform einer erfindungsgemäßen Spannvorrichtung 1.2. Demnach wird die Figurenbeschreibung zu den Figuren 1 bis 11 bzw. zu den Figuren 12 bis 15 bzw. zu den Figuren 16 bis 19 hier vollumfänglich einbezogen. Das Stangenprofil 21 des Zwischenwandverschlusses 20 kann als Hohlprofil oder zumindest als teilweises Hohlprofil oder als Vollmaterial-Profil mit oder ohne Aufnahmeraum für das Einschubelement ausgestaltet sein. Es ist demnach denkbar, dass das Stangenprofil zumindest abschnittsweise mit einem anderen Material, wie beispielsweise einem Holzmaterial gefüllt ist. Dabei kann das Holzmaterial vorteilhaft ein Vollholzmaterial, wie beispielsweise aus Eiche, Esche, Douglasie oder Buche etc. sein. Die Spannvorrichtungen 1, 1.1 oder 1.2 sind zumindest abschnittsweise in einem hier nicht gezeigten Aufnahmeraum des Stangenprofils 21 aufgenommen, vorteilhaft verschieblich, also teleskopierbar aufgenommen.

### Bezugszeichenliste

- 1: Spannvorrichtung (erste Ausführungsform)
- 1.1: Spannvorrichtung (zweite Ausführungsform)
- 1.2: Spannvorrichtung (dritte Ausführungsform)
- 2: Einschubelement
- 2.1: distales Kontaktende
- 2.2: Verkantungskante
- 2.3: Durchgangsöffnung
- 3: Klemmbaugruppe
- 4: Hakenelement
- 4.1: Klemmabschnitt
- 4.2: Ausgleichsabschnitt
- 4.3: Durchgangsöffnungen
- 5: Hebelelement
- 6: Verbindungselement
- 6.1: Gleitabschnitt
- 6.2: Wandung
- 6.3: Durchgangsöffnung
- 7: (Niet-)Bolzen/bolzenförmiges Element
- 8: Niet
- 9: Schraubenelement (Ringschraube/Ösenschraube)
- 10: Stift
- 11: Justiermutter
- 12: (erstes) Federelement (Druckfeder)
- 13: Scheibe
- 14: (zweites) Federelement (Druckfeder)
- 15: Mutter
- 16: Führungselement
- 17: Klemmspalt /Abstand
- 18: Verstelleinrichtung
- 19: Bordwand
- 19.1: Verkantungsoberfläche
- 19.2: Kontaktoberfläche
- 20: Zwischenwandverschluss
- 21: Stangenprofil
- 30: Kontrolleinrichtung
- 31: Kontrollelement
- 32: Kontrollgegenelement
- 33: Markierung am Kontrollelement
- 34: Markierung am Kontrollgegenelement

- D: Drehachse
- d: Dicke
- H: Hebelachse
- K: Druckkraft
- L: Längsrichtung
- R: Drehrichtung

## Patentansprüche

1. Spannvorrichtung (1, 1.1, 1.2) für einen Zwischenwandverschluss (20) zur Anordnung an einer Bordwand (19) eines Fahrzeuges oder eines Fahrzeuganhängers,
wobei die Spannvorrichtung (1, 1.1, 1.2) ein Einschubelement (2) sowie
eine um eine Drehachse (D) drehbar zu dem Einschubelement (2) und über die Drehachse (D) mit dem Einschubelement (2) verbundene Klemmbaugruppe (3) aufweist, wobei die Drehachse (D) sich zumindest teilweise von der Klemmbaugruppe (3) zu dem Einschubelement (2) erstreckt;
**dadurch gekennzeichnet, dass**
die Klemmbaugruppe (3) ein sich zumindest abschnittsweise über ein distales Kontaktende (2.1) des Einschubelementes (2) weg erstreckendes Hakenelement (4) aufweist, welches einen Ausgleichsabschnitt (4.2) und einen zum Ausgleichsabschnitt (4.2) abgewinkelt ausgebildeten Klemmabschnitt (4.1) aufweist und
wobei der Klemmabschnitt (4.1) und das distale Kontaktende (2.1) des Einschubelementes (2) mittels eines hinsichtlich einer zwischen dem Klemmabschnitt (4.1) und dem distalen Kontaktende (2.1) bestehenden und hinsichtlich dessen Spaltbreite größenveränderlichen Klemmspaltes (17) zur zumindest abschnittsweisen Aufnahme eines Abschnittes einer Bordwand (19) derart variabel voneinander beabstandet sind, dass bei einer Drehung der Klemmbaugruppe (3) oder bei einer Drehung des Einschubelementes (2) um die Drehachse (D) der Klemmspalt (17) gleichzeitig zumindest abschnittsweise eine Klemmspaltvergrößerung und zumindest abschnittsweise eine Klemmspaltverkleinerung zur selbstverstärkenden Klemmung der Spannvorrichtung (1, 1.1, 1.2) an der Bordwand (19) aufweist.

2. Spannvorrichtung (1, 1.1, 1.2) gemäß Anspruch 1,
**dadurch gekennzeichnet, dass**
die Klemmbaugruppe (3) vollständig außerhalb des Einschubelementes (2) ausgebildet und angeordnet ist.

3. Spannvorrichtung (1, 1.1, 1.2) gemäß Anspruch 1 oder 2,
**dadurch gekennzeichnet, dass**
die Klemmbaugruppe (3) das Hakenelement (4), ein Hebelelement (5) und ein das Hakenelement (4) und das Hebelelement (5) miteinander wirkverbindendes Verbindungselement (6) aufweist.

4. Spannvorrichtung (1, 1.1, 1.2) gemäß einem der vorangegangenen Ansprüche,
**dadurch gekennzeichnet, dass**
eine selbstverstärkende Klemmung der Spannvorrichtung (1, 1.1, 1.2) an der Bordwand (19) ausschließlich über die Klemmbaugruppe (3), insbesondere den Klemmabschnitt (4.1) des Hakenelementes (4), sowie das distale Kontaktende (2.1) des Einschubelementes (2) erzeugt ist.

5. Spannvorrichtung (1, 1.1, 1.2) gemäß einem der vorangegangenen Ansprüche,
**dadurch gekennzeichnet, dass**
das Hakenelement (4) über ein sich durch ein Führungselement (16) des Hebelelementes (5) hindurch erstreckendes Schraubenelement (9) mit dem Hebelelement (5) wirkverbunden ist.

6. Spannvorrichtung (1, 1.1, 1.2) gemäß einem der vorangegangenen Ansprüche,
**dadurch gekennzeichnet, dass**
das Verbindungselement (6) einen zumindest abschnittsweise U-förmigen Querschnitt mit einem Gleitabschnitt (6.1) und zwei sich vom Gleitabschnitt (6.1) weg erstreckenden Wandungen (6.2) aufweist, wobei der Gleitabschnitt (6.1) das Einschubelement (2) zumindest abschnittsweise kontaktiert.

7. Spannvorrichtung (1, 1.1, 1.2) gemäß Anspruch 6,
**dadurch gekennzeichnet, dass**
der Ausgleichsabschnitt (4.2) des Hakenelementes (4) derart gleitend auf dem Gleitabschnitt (6.1) des Verbindungselementes (6) zumindest abschnittsweise aufgenommen ist, dass das Hakenelement (4) zumindest abschnittsweise in Verbindungselementlängsrichtung (L) bewegbar ist

8. Spannvorrichtung (1, 1.1, 1.2) gemäß einem der vorangegangenen Ansprüche,
**dadurch gekennzeichnet, dass**
das am distalen Kontaktende (2.1) des Einschubelementes (2) wenigstens eine Verkantungskante (2.2) ausgebildet ist, welche bei einem Auftreten einer selbstverstärkenden Klemmung derart in das Material der Bordwand (19) eingreift, dass das Einschubelement (2) mit der Bordwand (19) verkantet ist.

9. Spannvorrichtung (1, 1.1, 1.2) gemäß einem der vorangegangenen Ansprüche,
**dadurch gekennzeichnet, dass**
die Spannvorrichtung (1, 1.1, 1.2) wenigstens eine Kontrolleinrichtung (30) zumindest zur Überprüfung einer Einstellung der Spaltbreite des Klemmspaltes (17) aufweist.

10. Zwischenwandverschluss (20) aufweisend wenigstens eine Spannvorrichtung (1, 1.1, 1.2) gemäß einem der vorangegangenen Ansprüche 1 bis 9,
**dadurch gekennzeichnet, dass**
ein zumindest teilweise hohles Stangenprofil (21) derart mit der wenigstens einen Spannvorrichtung (1, 1.1, 1.2) verbunden ist, dass ein distaler Endabschnitt des Einschubelementes (2) mit dem Stangenprofil (21) teleskopierbar verbunden ist.

11. Verfahren der selbstverstärkenden Klemmung des Zwischenwandverschlusses (20) gemäß Anspruch 10 an einer Bordwand (19) eines Fahrzeuges oder eines Fahrzeuganhängers, mit den folgenden Schritten:
a) Anbringen des Zwischenwandverschlusses (20) an der Bordwand (19) durch einen Bediener derart, dass die an den jeweiligen distalen Enden des Stangenprofils (21) angeordneten Spannvorrichtungen (1, 1.1, 1.2) an den einander gegenüberliegenden Bordwänden (19) fixiert werden, indem zumindest ein Abschnitt der jeweiligen Bordwand (19) in den jeweiligen Klemmspalt (17) der jeweiligen Spannvorrichtung (1) eingebracht und die Breite des Klemmspaltes (17) über eine Betätigung der Verstelleinrichtung (18) an die Dicke der Bordwand (19) angepasst wird,
b) Betätigen des Hebelelementes (5) zum Fixieren der Bordwand (19) zwischen dem Klemmabschnitt (4.1) des Hakenelementes (4) und dem distalen Kontaktende (2.1) des Einschubelementes (2) durch den Bediener,
c) Aufbringen einer Kraft auf das Stangenprofil (21) des Zwischenwandverschlusses (20) durch eine auf dem Fahrzeug oder dem Fahrzeuganhänger geladenen und transportierten Fracht, wobei das mit dem Stangenprofil (21) verbundene Einschubelement (2) dergestalt um die Drehachse (D) ausgelenkt wird, dass der Klemmspalt (17) zumindest an einem Abschnitt eine Klemmspaltverkleinerung derart erfährt, dass der Bereich des distalen Kontaktendes (2.1) des Einschubelementes (2), bei welchem sich der Klemmspalt (17) verkleinert, zumindest abschnittsweise in das Material der Bordwand (19) eingreift und eine Verkantung des Einschubelementes (2) in der Bordwand (19) bedingt.
